# EUROPEAN PATENT APPLICATION

(11) **EP 4 597 439 A1**
(43) Date of publication of application: **06.08.2025**
(21) Application number: 24155840.2
(22) Date of filing: 05.02.2024
(51) Int. Cl.: G06V 10/24, G06V 10/20, G06V 10/82

(54) **ML-BASED AND KNOWLEDGE-ENHANCED TOPOLOGY PARSING, TRANSFORMATION AND FORMALIZATION FOR BROWNFIELD TOPOLOGIES**

(71) Applicant: ABB SCHWEIZ AG, 5400 Baden (CH)
(72) Inventor: BORRISON, Reuben, 68782 Brühl (DE); SCHOCH, Nicolai, 69120 Heidelberg (DE); HOERNICKE, Mario, 76829 Landau (DE)
(74) Representative: Maiwald GmbH

(57) **Abstract**

The present invention relates to a method, comprising: inputting a topology image to an artificial intelligence/machine learning, AI/ML, model; identifying a symbol and/or an embedding representation indicative of a symbol in at least a segment of the topology image; comparing a result of the identifying with at least one symbol among predetermined symbols and/or with at least one embedding representation indicative of a symbol among predetermined embedding representations indicative of predetermined symbols, wherein the predetermined symbols are associated with predetermined characteristics; based on a result of the comparing, determining at least one characteristic associated with the result of the identifying; and based on a result of the determining, deriving a structured representation from an image content of the topology image.

## Description

### FIELD OF THE INVENTION

The invention relates to apparatuses, methods and systems for machine learning-based and knowledge-enhanced Topology Parsing, Transformation and Formalization for Brownfield Topologies.

### BACKGROUND

Today, in the field of Process and Automation Engineering (PAEng), it is to be expected that it has continuously to be dealt with mainly brownfield engineering projects. For such brownfield engineering projects, there may often be obtained "images", like e.g. P&ID images or other kinds of topology images/screenshots, as input data.

### SUMMARY

However, in view of the above, old topology images and/or screenshots are normally processed by a human engineer, in order to thereon-based allow for further processing by means of the existing tools. Hence, such processing by a human engineer binds massive amounts of resources and may be very error-prone.

Thus, it would be valuable to be able to automatically process such information like old topology images and/or screenshots, i.e., parse it and transform it using artificial intelligence/machine learning (AI/ML) into a structured format, to then thereon-based make use of (traditional and/or deterministic) engineering tools again.

Hence, it would be advantageous to support or automated (as much as possible) the step of a human engineering processing the old topology images and/or screenshots. Such support or automation may be achieved by means of modern AI/ML algorithms. Thus, ideally, in case old topology images are input into such AI/ML model, a formalized representation and/or model, e.g., ontological and/or graph format, may be output.

Thus, AI/ML may be used to (further-) automate a processing, comprising parsing, transformation and formalization, of brownfield topologies. For example, according to an approach overview, a pre-trained ("out-of-the-box") AI/ML model, like e.g. a Generative Al model, such as a large language model (LLM), large vision model (LVM) or large multi-modal (LMM), may be used and may be applied to convert (old) topology images into e.g. text description. Continuously asking a user and/or expert for feedback on such obtained automated conversion/conversion results may allow to improve the AI/ML model and may thus allow to improve the obtained automated conversion/conversion results.

In view of the above, to address one or more of these concerns, there is provided, in a first aspect, a method comprising inputting a topology image to an artificial intelligence/machine learning, AI/ML, model; identifying a symbol and/or embedding representation indicative of a symbol in at least a segment of the topology image; comparing a result of the identifying with at least one symbol among predetermined symbols and/or with at least one embedding representation indicative of a symbol among predetermined embedding representations indicative of predetermined symbols, wherein the predetermined symbols are associated with predetermined characteristics; based on a result of the comparing, determining at least one characteristic associated with the result of the identifying; and based on a result of the determining, deriving a structured representation from an image content of the topology image.

In this way, the method is able to allow for a fast processing of brownfield topology information using AI/ML, in order to then thereafter allow for a deterministic further processing of the structured/formalized information. Hence, manual (human) parsing/transformation, which binds massive amounts of resources and which is very error-prone, may at least be reduced. Thus, there is provided support (or even full automation) of the topology parsing and transformation step, which may dramatically reduce cost and/or errors. Moreover, the method is further able to allow for a more deterministic and streamlined process, which is not affected by an individual work performance of a human worker, i.e. which does not differ from human-to-human.

Additionally, the method is further able to allow for being applied to third-party topologies, if the system (comprising the AI/ML model) is trained on a variety of symbol variations.

In an example, the identifying may comprise identifying the symbol and/or the embedding representation by use of the AI/ML model; and/or the identifying may comprise identifying an embedding representation indicative of the symbol and identifying the symbol from the identified embedding representation; and/or the comparing may comprise comparing the identified symbol and/or the identified embedding representation by use of at least one of nearest neighbor-search, similarity search, a lookup table in which the predetermined symbols and associated characteristics are stored, and a representation indicative of the predetermined embedding representations; and/or the determining may comprise determining the at least one characteristic by use of the AI/ML model; and/or the deriving may comprise deriving the structured representation by use of the AI/ML model.

Moreover, in a further example, the determining may comprise determining, as the at least one characteristic, at least one of inputs and/or outputs related to the identified symbol and/or the identified embedding representation, and a predetermined symbol and/or a predetermined embedding representation related to the identified symbol and/or the identified embedding representation.

Furthermore, in a further example, the identifying may comprise identifying at least two symbols and/or at least two embedding representations; and wherein the determining may comprise determining, as the at least one characteristic, a proximity of the identified symbols and/or the identified embedding representations to each other and determining a relation among the identified symbols and/or the identified embedding representations based on the result of the comparing and on the determined proximity.

Additionally, in a further example, the deriving may comprise at least one of parsing, recognizing, transforming, and formalizing the image content.

Moreover, in a further example, the method may further comprise receiving feedback on the result of the identifying and/or on the result of the comparing and/or on the result of the determining and/or on a result of the deriving; and training and/or retraining the AI/ML model based on the feedback.

Furthermore, in a further example, the method may further comprise generating code and/or a control graphic based on the structured representation; and processing the image content based on the code and/or the control graphic.

Additionally, in a further example, the topology image may show a brownfield topology and/or may comprise brownfield topology information.

Moreover, in a further example, the structured representation may be at least one of a text description indicative of the image content of the topology image, an ontological format indicative of the image content, and a graph format indicative of the image content.

Furthermore, in a further example, the AI/ML model may be based on further using at least one of: joint embeddings and/or nearest neighbor-search, image classification and/or segmentation, and proximity-based relation identification, transformer-based neural networks, and an analytics pipeline comprising the lookup table and similarity search.

Additionally, in a further example, the symbol and/or predetermined symbol may be associated with at least one of: a valve, a tank, a sensor, a reactor, a boiler, a mixer, a separator, a controller, and an input/inlet/output/outlet, and/or the at least one characteristic and/or predetermined characteristic may comprise at least one of: an input to the symbol and/or predetermined symbol, an output from the symbol and/or predetermined symbol, a relation of the symbol and/or predetermined symbol to another symbol and/or predetermined symbol, a connection of the symbol and/or predetermined symbol to another symbol and/or predetermined symbol, an indication about whether the relation is one-directional or bi-directional, and an indication about whether the relation is labelled with a text representing the type of the relation and/or giving further details and/or attributes.

According to a second aspect, there is provided a control apparatus for a topology image processing control system, the control apparatus being configured to carry out the above-outlined method of the first aspect.

According to a third aspect, there is provided a topology image processing control system configured to carry out the above-outlined method of the first aspect.

According to a fourth aspect, there is provided an industrial automation system comprising the control apparatus of the second aspect and/or the topology image processing control system of the third aspect.

The method of the first aspect may be computer implemented. Optional features of the first aspect may form part of any of the second to fourth aspects, mutatis mutandis.

According to a fifth aspect, there is provided a computing system configured to perform the method of the first aspect.

According to a sixth aspect, there is provided a computer program (product) comprising instructions which, when executed by a computing system, enable or cause the computing system to perform the method of the first aspect.

According to a seventh aspect, there is provided a computer-readable (storage) medium comprising instructions which, when executed by a computing system, enable or cause the computing system to perform the method of the first aspect. The computer-readable medium may be transitory or non-transitory, volatile or non-volatile.

By using AI/ML for (further) automating the processing of brownfield topologies as outlined above and as described herein below in more detail, fast processing of brownfield topology information using AI/ML is enabled, in order to then thereafter allow for deterministic further processing of the structured/formalized information using our existing tools. Manual (human) parsing/transformation, which binds massive amounts of resources and which is very error-prone, may be at least reduced. Support (or even full automation) of the topology parsing and transformation step is therefore enabled, which may allow to dramatically reduce cost and/or errors. In addition, it is enabled for a more deterministic and streamlined process, which e.g. does not differ from human-to-human. Furthermore, application to third-party topologies is enabled, if the system (comprising the AI/ML model) is trained on a variety of symbol variations.

By "(process) automation system" is meant an industrial plant or production plant comprising one or more pipelines, production lines, and/or assembly lines for transforming one or more educts into a product and/or for assembling one or more components into a final product.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- FIG. 1 illustrates an example overview for an AI/ML model-based system including a feedback loop, which derives a structured representation from an image content of a topology image;
- FIG. 2 illustrates an example of converting a topology image into a topology graph, by e.g. use of the system according to FIG. 1; and
- FIG. 3 illustrates an example method for deriving a structured representation from an image content of a topology image.

### DETAILED DESCRIPTION

In order to solve the above-outlined drawbacks in the prior art, it is i.a. disclosed herein to use an AI/ML model to derive from an image content (comprising to parse, recognize, transform and/or formalize the image content) a formalized and/or structured representation, like e.g. an ontological representation and/or a graph representation, which may be used by different engineering tools. Complementary to the AI/ML model, a knowledge representation component may support and provide higher confidence, by providing a lookup table comprising standard symbols and/or connections among standard symbols, which can be used for similarity search, consistency checks and/or uncertainty reduction. Moreover, an integration of a feedback component to may further and/or continuously improve the system.

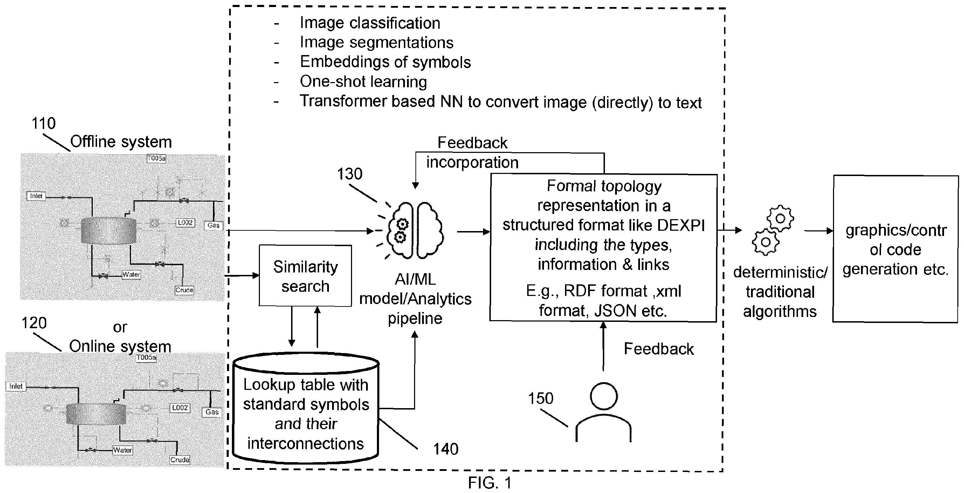

Reference is made to FIG. 1, which illustrates an example overview for an AI/ML model-based system including a feedback loop, which derives a structured representation from an image content of a topology image.

Accordingly, it is disclosed an AI/ML-based and knowledge-enhanced topology parsing, topology recognizing, topology transformation and topology formalization for topology images comprising e.g. brownfield topologies. Possible AI/ML-methods to make use of for such approach are, for example only without limitation on these examples, (1) joint embeddings and nearest neighbor-search, (2) image classification and/or segmentation and proximity-based relation identification, (3) transformer-based neural networks, and (4) analytics pipeline using a lookup table and similarity search. The methods as outlined under items (1), (2) and (3) may either use a pre-trained ("out-of-the-box") model, like e.g. an LLM-based embedding, and may apply such pre-trained model to convert topology images to a structured representation, like e.g. a text description. Continuously asking a user (expert user) for feedback on the results obtained from such pre-trained model allows to further improve the AI/ML model. Hence, it is i.a. disclosed herein that an AI/ML model is trained to convert topology images into a structured representation, like e.g. a text description.

Hence, with reference to FIG. 1, one idea underlying the present disclosure it may be understood to input to the AI/ML model a topology image (or screenshot) and to obtain, as output, a formal model and/or formal representation of the input topology image. Such formal model and/or formal representation may be an ontology or a graph, e.g. in DEXPI format. Thereafter, this formal model and/or formal representation may be transformed by using existing (deterministic) engineering tools.

In the following, several processing steps are outlined according to an example with reference to FIG. 1.

In Step 1, a topology image 110 (or120) (reference number 110 referring to a first topology image, which shows a topology/system as an offline system (indicated crosses); reference number 120 referring to a second topology image, which shows the same topology/system as the first topology image but as an online system (no indicated crosses)) is given as an input to the AI/ML model (or AI/ML/analytics pipeline) 130 to derive from the topology image 110 (or 120) e.g. a formal description of text.

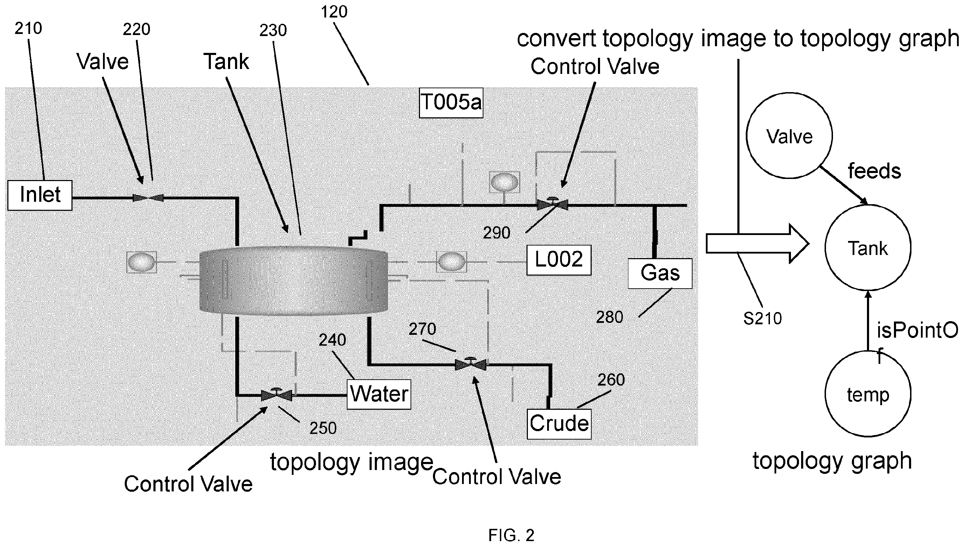

The topology image 110 (or 120) or the image content of the topology image 110 (or 120), as shown in more detail in FIG. 2, shows an inlet 210, which is connected to a tank 230. The connection between the inlet 210 and the tank 230 includes a valve 220. Moreover, water 240, crude 260 and gas 280 may be supplied into the tank 230 via respective control valves 250, 270 and 290.

In the topology image 110 (or120), the tank 230, the valve 220 and the control valves 250, 270 and 290 are illustrated by respective symbols, for example. The AI/ML model 130 identifies these symbols from (the image content of) the topology image 110 (or120). In addition, as illustrated in FIG. 1, a similarity search may be performed for the identified symbols. In more detail, the identified symbols may be matched against predetermined and/or standard symbols stored in a lookup table 140 by use of nearest neighbor-search (the predetermined symbols may represent standard symbols). The lookup table 140 may store characteristics of the predetermined and/or standard symbols, like e.g. respective inputs and/or outputs. Moreover, as further characteristics, the lookup table 140 may also store information about interconnections among certain predetermined and/or standard symbols. Hence, after the matching, the identified symbols are associated with the characteristics of the matched predetermined and/or standard symbols.

It shall be noted that such matching is not limited to a one-to-one-matching. Rather, in a one-to-many-matching, one identified symbol may be matched to several predetermined and/or standard symbols, e.g. in case that the identified symbol may represent an old, obsolete, or outdated symbol, which (the function of which) is nowadays represented by several predetermined and/or standard symbols. In a many-to-one-matching, several old, obsolete, or outdated symbols (the function of them) may nowadays be represented by just one predetermined and/or standard symbol. In a similar manner, also a many-to-many-matching may be possible.

The matched identified symbols (and their characteristics) may also be given as input to the AI/ML model 130.

In Step 2, the AI/ML model 130 may be composed of one of the following, but is not limited thereto:
Usage of a pretrained transformer based neural networks, which are trained to convert topology images to formal models like DEXPI or an ontology. These models can directly convert the topology image 110 (or 120) (the image content of the topology image) to a structured representation, like e.g. text/description text. Usage of lookup tables and/or embeddings, wherein the lookup table 140 and/or embeddings consist of predetermined and/or standard symbols of e.g. tanks and valves (see FIG: 2). The topology image 110 (or 120) may be segmented to identify different symbols in the image (in the image content). A similarity search may be used to match the identified symbols to existing predetermined and/or standard symbols (which are stored in the lookup table 140). The AI/ML model 130 may then derive from the information stored in the lookup table 140 the inputs and/or outputs of predetermined and/or standard symbols (hence, the inputs and/or outputs of correspondingly matched identified symbols). Such lookup table approach may increase accuracy in validating and/or matching the identified symbols. Moreover, using a lookup table may provide further beneficial information about characteristics of certain symbols, like e.g. what other element(s) (like e.g. "water", "crude", "gas") and/or symbol(s) is/are (usually) connected, connectable and/or must not be connected to a certain symbol.

Usage of (traditional) AI/ML, where image classification and/or segmentation may be used to identify different symbols in the image (in the image content). Based on a proximity of identified symbols to each other, e.g. relation(s) and/or linkage(s) (like connection(s) or connection rule(s)) may be identified by validating and/or matching the relation(s) and/or linkage(s) with the standard symbols. For example, the identified symbols and their linkages may be matched to the standard text or ontology.

In Step 3, a user 150 may then provide feedback to the generated structured representation (like e.g. text description), which may be incorporated in the AI/ML model 130 to train and/or retrain the AI/ML model 130 for further usage.

In Step 4, once a structured representation (like e.g. text description) of the image (the image content) is available, such structured representation may be used for a variety of applications, such as, but not limited thereto, code generation or control graphic generation. Examples for code comprise IEC61131-3 and IEC61499.

Referring now to FIG. 2, FIG. 2 illustrates an example of converting a topology image into a topology graph, by e.g. use of the system according to FIG. 1.

The topology image 120 is the same as outlined and described above with reference to FIG. 1. For example, the topology image 120 shows a tank 230, which is connected to an inlet 210 via a valve 220. Then, as indicated by step S210, in case the topology image 120 is converted by e.g. use of the system as outlined above with reference to FIG. 1, a topology graph may be obtained. Such topology graph may i.a. comprise a first element (e.g. a first circle), which reads "Valve" and a second element (e.g. a second circle), which reads "Tank", wherein both of these elements are connected by an arrow pointing from the "Valve" to the "Tank", indicating that the tank is fed via the valve. I.e., for example, the topology graph may illustrate how the tank 230 from the topology image 110 (or 120) according to FIG. 1 or 2 is connected to the valve 220 from the topology image 110 (or 120) according to FIG. 1 or 2. It shall be noted that e.g. a text description may be used instead of (or in addition to) the topology graph, wherein such text description may e.g. describe, by text, how the tank 230 is connected to the valve 220. Hence, in doing so, a topology image may be converted into a structured representation.

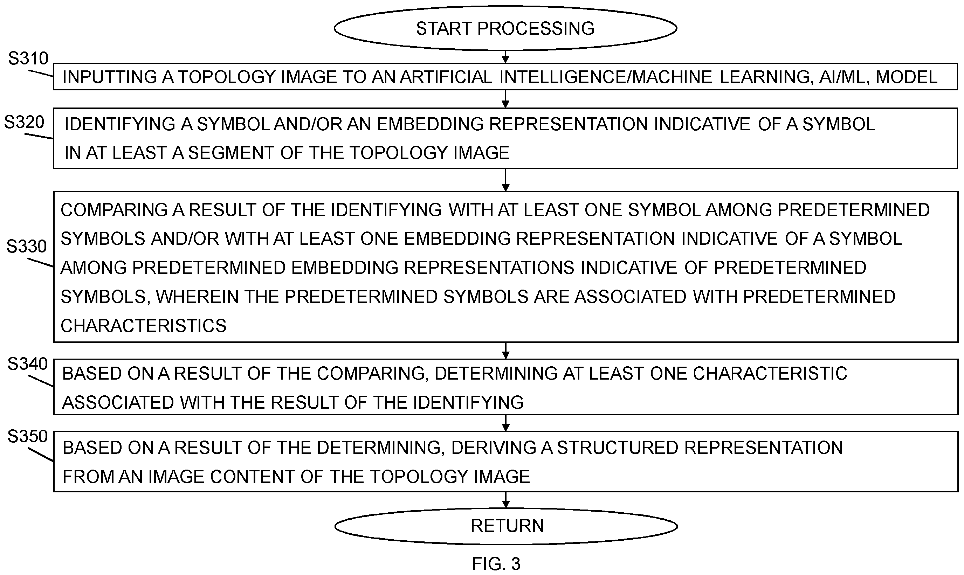

Referring now to FIG. 3, FIG. 3 illustrates an example method for deriving a structured representation from an image content of a topology image.

In Step S310, the method comprises inputting a topology image to an artificial intelligence/machine learning, AI/ML, model.

It shall be noted that such inputting may represent at least part of such inputting as outlined above with reference to FIG. 1, step 1. Moreover, such topology image may represent such topology image 110 or 120 as outlined above with reference to FIGs. 1 and 2. Additionally, the AI/ML model may represent such AI/ML model 130 as outlined above with reference to FIGs. 1 and 2. It shall further be noted that the AI/ML model is not limited to any specific AI/ML model(s). Rather, any (now and/or future) AI/ML model(s) suitable to be applied in the method as outlined with reference to FIG. 3 is intended to be covered by such AI/ML model as e.g. mentioned regarding Step S310.

In Step S320, the method further comprises identifying a symbol and/or an embedding representation indicative of a symbol in at least a segment of the topology image.

It shall be noted that such identifying may comprise at least part of such identifying as outlined above with reference to FIG. 1, step 2. Moreover, such symbol may represent at least one of such symbols as outlined above with reference to FIGs. 1 and 2, and may thus a tank, a valve or a control valve, for example, without being limited to that, however. Rather, the term symbol is to be understood as representing and/or comprising any type and/or sort of element and/or component shown in an (topology) image. Such element and/or component may have a certain (technical) function, may have certain inputs/outputs, may be connected to another such element and/or component, and/or may be in any relation (e.g. locally, technically, functionally) to another such element and/or component. An embedding representation may be understood, without being limited to that, to represent an embedding of one or several symbols among and/or in an arrangement (e.g. structural arrangement) of one or several further symbols and/or of one or several connections/interconnections to/with e.g. one or several such further symbols.

In Step S330, the method further comprises comparing a result of the identifying with at least one symbol among predetermined symbols and/or with at least one embedding representation indicative of a symbol among predetermined embedding representations indicative of predetermined symbols, wherein the predetermined symbols are associated with predetermined characteristics.

It shall be noted that such comparing may be understood as a matching and may comprise at least part of such matching (or verifying) as outlined above with reference to FIG. 1, steps 1 and 2. The predetermined symbols may represent such standard symbols as outlined above with reference to FIGs. 1 and 2. The predetermined embedding representations may be understood, without being limited to that, to represent e.g. known and/or stored and/or described (e.g. by text) and/or standard embeddings/embedding representations. Furthermore, the predetermined characteristics may represent at least part of such characteristics as outlined above with reference to FIG. 1, steps 1 and 2. Hence, for instance, such predetermined characteristics comprise, without being limited thereto, inputs and/or outputs related to a certain symbol (e.g. to a certain tank), connections to other symbols (e.g. other tank or valve), possible/permitted connections to other symbols, and prohibited connections to other symbols. The matching may be a one-directional matching (matching identified symbols to predetermined symbols or matching predetermined symbols to identified symbols) or a two-directional/bi-directional matching (matching identified symbols to predetermined symbols and matching predetermined symbols to identified symbols). Moreover, the result of the identifying may comprise at least one identified symbol and/or at least one identified embedding representation.

In Step S340, the method further comprises, based on a result of the comparing, determining at least one characteristic associated with the result of the identifying.

It shall be noted that such determining may e.g. comprise that for an identified symbol being a tank for instance, characteristics of a compared/matched standard tank, like e.g. certain inputs and/or outputs of such compared/matched standard tank, are assigned to/associated with the identified symbol (i.e. are determined to be valid (at least for a certain amount) for the identified symbol).

In Step S350, the method further comprises, based on a result of the determining, deriving a structured representation from an image content of the topology image.

It shall be noted that such deriving may represent at least part of such converting of a topology image into a topology graph as outlined above with reference to FIG. 2. Furthermore, the structured representation may be indicative of the symbols shown in the topology image and/or of the connections/interconnections of these symbols.

Moreover, according to an example, the identifying may comprise identifying the symbol and/or the embedding representation by use of the AI/ML model; and/or the identifying may comprise identifying an embedding representation indicative of the symbol and identifying the symbol from the identified embedding representation; and/or the comparing may comprise comparing the identified symbol and/or the identified embedding representation by use of at least one of nearest neighbor-search, similarity search, a lookup table in which the predetermined symbols and associated characteristics are stored, and a representation indicative of the predetermined embedding representations; and/or the determining may comprise determining the at least one characteristic by use of the AI/ML model; and/or the deriving may comprise deriving the structured representation by use of the AI/ML model.

It shall be noted that the similarity search may represent such similarity search as outlined above with reference to FIG. 1, step 1. Further, the lookup table may represent such lookup table 140 as outlined above with reference to FIG. 1. Moreover, the representation may be understood to also represent a (same or different) lookup table, e.g. from which the predetermined embedding representations are accessible. Such predetermined embedding representations may be associated with the characteristics, since the predetermined embedding representations are indicative of the predetermined symbols, which are associated with the characteristics.

Further, in a further example, the determining may comprise determining, as the at least one characteristic, at least one of inputs and/or outputs related to the identified symbol and/or the identified embedding representation, and a predetermined symbol and/or a predetermined embedding representation related to the identified symbol and/or the identified embedding representation.

It shall be noted that such predetermined symbol related to the identified symbol may represent a valve as the predetermined symbol, which is related to a tank as the identified symbol by being connected to the tank. Alternatively, such relation may also indicate that a connection is prohibited, i.e. the valve must not be connected to the tank. A relation may be a one- directional relation (relation of an identified symbol to a predetermined symbol or relation of a predetermined symbol to an identified symbol) or a two- directional relation (relation of an identified symbol to a predetermined symbol and relation of a predetermined symbol to an identified symbol).

Furthermore, in a further example, the identifying may comprise identifying at least two symbols and/or at least two embedding representations; and wherein the determining may comprise determining, as the at least one characteristic, a proximity of the identified symbols and/or the identified embedding representations to each other and determining a relation among the identified symbols based on the result of the comparing and on the determined proximity.

For example, with reference to FIG. 2, it may be determined that the identified inlet 210, the identified valve 220 and the identified tank 230 are in a certain proximity to each other. For example, such proximity may be determined as follows, without being limited thereto, in that it may be determined how close an arrangement of components (e.g. of symbols) in the topology image is, e.g. in centimeters or number of pixels. Alternatively and/or additionally, it may be determined whether or not such arrangement of components and/or the individual component(s) (e.g. inlet 210, valve 220, tank 230 with reference to FIG. 2) are/is connected by means of a pipe/tube (indicative of e.g. a certain material(s)/energy/signal flow(s)), are/is represented as a solid line/dashed line, and/or are/is shown with different colors (indicative of e.g. different groupings, relationships, and/or interconnections). Hence, distances (e.g. number of pixels when the topology image is shown on a screen or a length in centimeters) among the components (inlet 210, valve 220, tank 230) may be evaluated in comparison to an entire length (e.g. number of pixels or centimeters) of the topology image. Hence, in case it may be determined that the components (inlet 210, valve 220, tank 230) are arranged in a segment of the topology image, which forms e.g. one-fourth or less of the topology image, the proximity may be considered relevant, in that a connection among at least some of these components (inlet 210, valve 220, tank 230) may be expectable/likely.

Additionally, in a further example, the deriving may comprise at least one of parsing, recognizing, transforming, and formalizing the image content.

It shall be noted that "parsing" may mean loading and analyzing, subdividing and structuring and understanding (from a computer perspective) the image (i.e., the pixels and their inter-relations), that "recognizing" may comprise to recognize symbols/components in the image, and that "transforming and formalizing" may mean that it may be obtained an abstract representation (e.g., an embedding) first and that it may be obtained a graph/structured representation (e.g., an xml/owl output) thereafter.

Moreover, in a further example, the method may further comprise receiving feedback on the result of the identifying and/or on the result of the comparing and/or on the result of the determining and/or on a result of the deriving; and training and/or retraining the AI/ML model based on the feedback.

It shall be noted that such feedback loop may represent at least part of such feedback loop as outlined above with reference to FIG. 1, step 3. In addition, before being provided to e.g. a user for feedback reasons, the result(s) of the matching, determining and/or deriving may be evaluated by the AI/ML model in view of confidence and/or accuracy (or by any means for evaluating the confidence and/or accuracy of the result(s). Then, in case the result(s) may have a confidence value and/or accuracy value below a predetermined confidence threshold value and/or below a predetermined accuracy threshold value, the user may give feedback on such result(s). The feedback on the result(s) having the confidence value and/or accuracy value below the corresponding threshold value may be fed back to the AI/ML model for training and/or retraining purposes. No feedback may be required in case the result(s) may have the confidence value and/or accuracy value equal to or above the corresponding threshold value.

Furthermore, in a further example, the method may further comprise generating code and/or a control graphic based on the structured representation; and processing the image content based on the code and/or the control graphic.

It shall be noted that such code and/or graphic generation may represent at least part of such code and/or graphic generation as outlined above with reference to FIG. 1, step 4. Examples for the generated code, without being limited thereto, comprise e.g. IEC61131-3 and IEC61499.

Additionally, in a further example, the topology image may show a brownfield topology and/or may comprise brownfield topology information.

It shall be noted that such topology image may represent such topology image 110 or 120 as illustrated with reference to FIGs. 1 and 2.

Moreover, in a further example, the structured representation may be at least one of a text description indicative of the image content of the topology image, an ontological format indicative of the image content, and a graph format indicative of the image content.

It shall be noted that such graph format may represent such topology graph as illustrated with reference to FIG. 2.

Furthermore, in a further example, the AI/ML model may be based on further using at least one of: joint embeddings and/or nearest neighbor-search, image classification and/or segmentation, and proximity-based relation identification, transformer-based neural networks, and an analytics pipeline comprising the lookup table and similarity search.

Additionally, in a further example, the symbol and/or predetermined symbol may be associated with at least one of, without being limited to that: a valve, a tank, a sensor, a reactor, a boiler, a mixer, a separator, a controller, and an input/inlet/output/outlet, and/or the at least one characteristic and/or predetermined characteristic may comprise at least one of: an input to the symbol and/or predetermined symbol, an output from the symbol and/or predetermined symbol, a relation of the symbol and/or predetermined symbol to another symbol and/or predetermined symbol, a connection of the symbol and/or predetermined symbol to another symbol and/or predetermined symbol, an indication about whether the relation is one-directional or bi-directional, and an indication about whether the relation is labelled with a text representing the type of the relation and/or giving further details and/or attributes.

Furthermore, according to various examples, a control apparatus for a topology image processing control system is disclosed, wherein the control apparatus is configured to carry out the methods as outlined above with reference to FIGs 1 to 3. For instance, the control apparatus may comprise a processor and a memory for storing instructions, which, when executed by the processor, may cause the control apparatus to e.g. execute the method steps as outlined above with reference to FIG.3. For such execution, the control apparatus may comprise several functional portions, e.g. an inputting portion to carry out a process according to Step S310 of FIG. 3, an identifying portion to carry out a process according to Step S320 of FIG. 3, a comparing portion to carry out a process according to Step S330 of FIG. 3 a determining portion to carry out a process according to Step S340 of FIG. 3, and a deriving portion to carry out a process according to Step S350 of FIG. 3. Further, such portions may be understood to represent means for carrying out the certain function or to represent portions, which are configured to carry out the certain function.

Further, according to various examples, a topology image processing control system is disclosed, which is configured to carry out the methods and/or method steps as outlined above with reference to FIGs. 1 to 3.

Moreover, according to various examples, an industrial automation system is disclosed, which comprises the control apparatus and/or the topology image processing control system.

Further, according to various examples, a computer-readable medium comprising instructions is disclosed, which, when executed by a computing system, cause the computing system to perform the methods and/or method steps as outlined above with reference to FIGs. 1 to 3.

Additionally, according to various examples, the methods and/or method steps as outlined with reference to FIGs. 1 to 3 may be computer implemented.

Further, according to various examples, there is provided a computing system configured to perform the methods and/or method steps as outlined above with reference to FIGs. 1 to 3.

Moreover, according to various examples, there is provided a computer program (product) comprising instructions which, when executed by a computing system, enable or cause the computing system to perform the methods and/or method steps as outlined above with reference to FIGs. 1 to 3. The computer program product may comprise a computer-readable medium comprising instructions of the computer program product.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

### Reference signs:

110, 120: topology image; 130: AI/ML model; 140: lookup table; 150: user; 210: inlet; 220: valve; 230: tank; 240: water; 250: control valve; 260: crude; 270: control valve; 280: gas; 290: control valve

## Claims

1. A method for processing topology images, comprising:
inputting a topology image to an artificial intelligence/machine learning, AI/ML, model;
identifying a symbol and/or an embedding representation indicative of a symbol in at least a segment of the topology image;
comparing a result of the identifying with at least one symbol among predetermined symbols and/or with at least one embedding representation indicative of a symbol among predetermined embedding representations indicative of predetermined symbols, wherein the predetermined symbols are associated with predetermined characteristics;
based on a result of the comparing, determining at least one characteristic associated with the result of the identifying; and
based on a result of the determining, deriving a structured representation from an image content of the topology image.

2. The method according to claim 1, wherein
the identifying comprises identifying the symbol and/or the embedding representation by use of the AI/ML model; and/or
the identifying comprises identifying an embedding representation indicative of the symbol and identifying the symbol from the identified embedding representation; and/or
the comparing comprises comparing the identified symbol and/or the identified embedding representation by use of at least one of nearest neighbor-search, similarity search, a lookup table in which the predetermined symbols and associated characteristics are stored, and a representation indicative of the predetermined embedding representations; and/or
the determining comprises determining the at least one characteristic by use of the AI/ML model; and/or
the deriving comprises deriving the structured representation by use of the AI/ML model.

3. The method according to claim 1 or 2, wherein the determining comprises determining, as the at least one characteristic, at least one of
inputs and/or outputs related to the identified symbol and/or the identified embedding representation, and
a predetermined symbol and/or a predetermined embedding representation related to the identified symbol and/or the identified embedding representation.

4. The method according to any of claims 1 to 3,
wherein the identifying comprises identifying at least two symbols and/or two embedding representations; and
wherein the determining comprises determining, as the at least one characteristic, a proximity of the identified symbols and/or the identified embedding representations to each other and determining a relation among the identified symbols and/or the identified embedding representations based on the result of the comparing and on the determined proximity.

5. The method according to any of claims 1 to 4, wherein the deriving comprises at least one of parsing, recognizing, transforming, and formalizing the image content.

6. The method according to any of claims 1 to 5, further comprising:
receiving feedback on the result of the identifying and/or on the result of the comparing and/or on the result of the determining and/or on a result of the deriving; and
training and/or retraining the AI/ML model based on the feedback.

7. The method according to any of claims 1 to 6, further comprising:
generating code and/or a control graphic based on the structured representation; and
processing the image content based on the code and/or the control graphic.

8. The method according to any of claims 1 to 7, wherein the topology image shows a brownfield topology and/or comprises brownfield topology information.

9. The method according to any of claims 1 to 8, wherein the structured representation is at least one of
a text description indicative of the image content of the topology image,
an ontological format indicative of the image content, and
a graph format indicative of the image content.

10. The method according to any of claims 1 to 9, wherein the AI/ML model is based on further using at least one of:
joint embeddings and/or nearest neighbor-search,
image classification and/or segmentation, and proximity-based relation identification,
transformer-based neural networks, and
an analytics pipeline comprising the lookup table and similarity search.

11. The method according to any of claims 1 to 10,
wherein the symbol and/or predetermined symbol is associated with at least one of:
a valve, a tank, a sensor, a reactor, a boiler, a mixer, a separator, a controller, and an input/inlet/output/outlet; and/or
wherein the at least one characteristic and/or predetermined characteristic comprises at least one of:
an input to the symbol and/or predetermined symbol,
an output from the symbol and/or predetermined symbol,
a relation of the symbol and/or predetermined symbol to another symbol and/or predetermined symbol,
a connection of the symbol and/or predetermined symbol to another symbol and/or predetermined symbol,
an indication about whether the relation is one-directional or bi-directional, and
an indication about whether the relation is labelled with a text representing the type of relation and/or giving further details and/or attributes.

12. A control apparatus for a topology image processing control system, the apparatus being configured to carry out the method of any of claims 1 to 11.

13. A topology image processing control system configured to carry out the method of any of claims 1 to 11.

14. An industrial automation system comprising the apparatus of claim 12 and/or the topology image processing control system of claim 13.

15. A computer program product comprising instructions which, when executed by a computing system, enable or cause the computing system to perform the method of according to any of claims 1 to 11.
